# EUROPEAN PATENT APPLICATION

(11) **EP 4 848 570 A1**
(43) Date of publication of application: **02.12.2026**
(21) Application number: 26179595.9
(22) Date of filing: 19.05.2026
(51) Int. Cl.: H02P 5/74, B64C 13/50, G05B 9/03, B64C 9/00

(54) **MOTOR CONTROL UNIT, HIGH LIFT SYSTEM, AIRCRAFT WING AND AIRCRAFT**

(30) Priority: 27.05.2025 DE 102025001797
(71) Applicant: Airbus Operations GmbH, 21129 Hamburg (DE)
(72) Inventor: Dehnbostel, Sarah, 21129 Hamburg (DE); Rau, Catherine, 21129 Hamburg (DE)
(74) Representative: Airbus Germany

(57) **Abstract**

In order to produce a compact motor control unit, motor control unit (32) is provided which comprises a first voltage input terminal (36), a second voltage input terminal (37), at least one bus terminal (38, 39), an output bus bar (40) that is configured to control an electric motor (31), at least one bus reading unit (44; 45), a motor control circuit (42) that is coupled to the output bus bar (40), and a power switching element (41) that is coupled between the first voltage input terminal (36) and the output bus bar (40) or between the second voltage input terminal (37) and the output bus bar (40). The power switching element (41) is located in the motor control unit (32) and is configured to receive a command from the bus reading unit (44; 45) causing the power switching element (41) to switch on or off.

## Description

The present application relates to a motor control unit, a high lift system, an aircraft wing and an aircraft.

Electric motors may be used to change the position of another object. For example, an electric motor may be used as the primary drive of a vehicle or as an auxiliary drive. An auxiliary drive may be used to change the position of, e.g. deploy or retract, lift control devices in an aircraft. Examples of lift control devices are flaps and slats, which may also be categorised as take-off aids or landing aids.

Fixed wing aircraft typically include slats movably arranged along the leading edge of each wing and flaps movably arranged along the trailing edge of each wing. By selectively extending and retracting the flaps and/or slats, the aerodynamic flow conditions on the respective wing are influenced so as to increase the lift generated by the wing, for example for take-off and landing phases of the flight of the aircraft. During other flight phases, the slats and flaps are typically retracted to minimize drag. Since, the flaps and slats are extended and retracted so as to increase and decrease lift, the wings of the aircraft include further systems, such as cabling for electrical systems and pipes for hydraulic systems.

Published international patent application WO 2013/006340 A1 describes an electronically-synchronized flap system for a fixed-wing aircraft including a first wing having a first flap panel and a second wing having a second flap panel. The first flap panel is connected with a first in-board actuator and a first out-board actuator. The second flap panel is connected with a second in-board actuator and a second out-board actuator. The system has an electronic control unit configured to control the first and second in-board and out-board actuators to electronic synchronize the positions of the first and second flap panels.

It is an object of the invention is to provide a motor control unit that has increased functionality and a reduced weight.

A further object of the invention is to simplify the assembly and fabrication of flap and slat systems for aircraft.

This is solved by the subject matter of the independent claims. Further advantageous embodiments are the subject matter of the dependent claims.

The invention provides a motor control unit, which comprises a first voltage input terminal, a second voltage input terminal, at least one bus terminal, an output bus bar that is configured to control an electric motor, at least one bus reading unit, a motor control circuit that is coupled to the output bus bar and a power switching element coupled between the first voltage input terminal and the output bus bar or between the second voltage input terminal and the output bus bar. The power switching element is located in the motor control unit and is configured to receive a command from the bus reading unit causing the power switching element to switch on or off.

The first and second voltage input terminals provide independent power supplies. In an embodiment, the first voltage input terminal is a high voltage input terminal and the second voltage input terminal is a low voltage input terminal. If the electric motor is to be supplied with the high voltage, e.g. 270V, then the power switching element is coupled between the high voltage terminal and the output bus bar. If the electric motor is to be supplied with the low voltage, e.g. 28V, then the power switching element is coupled between the low voltage terminal and the output bus bar.

The power switching element is located within and forms part of the motor control unit. This has the advantage that a compact arrangement is provided which reduces the number of additional connections, e.g. cables. Additionally, a power switching element is provided that is integrated within the motor control unit providing additional functionality.

The electric motor may be used to change the position of a further object. For example, the electric motor may be used in a primary drive for propelling a vehicle or may be used in an auxiliary drive of a vehicle or in an auxiliary system of a vehicle.

Preferably, the power switching element is independent from the motor control circuit. This has the advantage that the power switching element can be used to switch off the supply of power to the electric motor by receiving a command signal from the bus reading unit only and independent of the motor control circuit. If, for example, the motor control circuit has a fault signal, the power to the electric motor can be switched off by way of the bus reading unit and power switching element.

Preferably, the power switching element comprises a relay.

In an embodiment, the bus reading unit is connected to the low voltage input terminal. This may be used to supply power to the bus reading unit. The bus reading unit may be connected between the low voltage input terminal and ground. The motor control circuit may also be connected to the low voltage terminal to supply power to the motor control circuit.

The bus reading unit may receive commands via a bus terminal from a further control unit, e.g. a flight control computer and is able to supply a command signal to the power switching element independently from the motor control circuit.

In an embodiment, the motor control unit comprises a first bus reading unit and a second bus reading unit that are coupled in parallel. A first one of the bus terminals is coupled to the first bus reading unit and a second one of the bus terminals is coupled to the second bus reading unit. This arrangement provides increased redundancy. The first bus reading unit and the second bus reading unit may receive commands via its respective bus terminal from a further control unit, e.g. a flight control computer and are able to supply a command signal to the power switching element independently from the motor control circuit.

In an embodiment, the motor control circuit comprises a command partition and a monitoring partition. The command partition is communicatively coupled to the output bus bar and to the monitoring partition. This enables the motor control circuit to send a command signal to the output bus bar, e.g. to drive the electric motor. The monitoring partition enables the status of the command output signal and the electric motor to be determined and monitored.

The at least one bus reading unit is communicatively coupled to the command partition, the monitoring partition and the power switching element. However, the motor control circuit is not communicatively coupled with the power switching element. In embodiments comprising first and second bus reading units, the first and second bus reading units are communicatively coupled to the command partition, the monitoring partition and the power switching element. However, the motor control circuit is not communicatively coupled with the power switching element.

In an embodiment, the at least one bus reading unit is configured to receive a signal from a flight control computer to reset an enable signal, thus causing the power switching element to switch off the power supply to the output bus bar or to switch on the power supply to the output bus bar.

In embodiments including first and second bus reading units, the first and second bus reading units are configured to receive a signal from a flight control computer to reset an enable signal, thus causing the power switching element to switch off the power supply to the output bus bar or to switch on the power supply to the output bus bar.

The invention also provides a high lift system of an aircraft. The high lift system comprises at least one motor control unit according to any one of the embodiments described herein, an electric motor that is driven by the motor control unit and at least one lift control device. The lift control device may be a flap or a slat. The electric motor is coupled to the at least one lift control device so as to extend or retract the at least one lift control device. For example, the electric motor may be coupled to at least one actuator that is coupled to the at least one lift control device so as to extend or retract the at least one lift control device. The electric motor may be used to drive the actuator in linearly so as to extend or retract the lift control device.

In an embodiment, two actuators for each lift control device are used. One electric motor may be connected to the two actuators that are coupled to the lift control device.

The high lift system may be a decentralised system, which comprises at least two high lift systems, each comprising at least one motor control unit which is dedicated to one lift control device. In a decentralised system, the high lift system may be called a high lift sub-system. Alternatively, the high lift system may be a centralized system and one motor control unit is dedicated to two or more lift control devices.

In an embodiment, the electric motor is an AC motor or a DC motor or a three-phase motor.

In an embodiment, the motor control unit is configured to receive commands from a flight control computer for primary flight control and, optionally, also for secondary flight control.

The invention also provides an aircraft wing comprising at least one high lift system according to any one of the embodiments described herein and a plurality of lift control devices, e.g. a plurality of flaps and/or slats. One motor control unit is coupled to one electric motor that is coupled to at least one lift control device so as to extend or retract the at least one lift control device.

The high lift system according to any one of the embodiments described herein may be used in a decentralized or centralized architecture.

In a decentralized high lift system architecture, one motor control unit is coupled to one electric motor that is coupled to one lift control device so as to extend or retract that lift control device. In a decentralized high lift system architecture, two or more high lift systems are provided which may be called high lift sub-systems. The at least one high lift system provides distributed flap and/or slat control.

In a centralized high lift system architecture, one motor control unit is coupled to one electric motor that is coupled to at least one lift control device, e.g. two or more lift control devices, so as to extend or retract the at least one lift control device.

In an embodiment, the electric motor is coupled to at least one actuator that is coupled to the lift control device so as to extend or retract the lift control device. Two actuators may be provided for each lift control device.

The invention also provides an aircraft comprising at least one aircraft wing of any one of the embodiments described herein. The aircraft typically comprises two aircraft wings which extend from opposing sides of a fuselage. Each of these two wings may be in accordance with any one of the embodiments described herein. The aircraft may be a fixed wing aeroplane, for example.

Embodiments will now be described with reference to the drawings, in which:
Fig. 1 illustrates an aircraft;
Fig. 2 illustrates a schematic system overview of a flap control system for a single flap;
Fig. 3 illustrates a schematic view of a motor control unit for a flap, and
Fig. 4 illustrates a logic diagram of the power switching element.

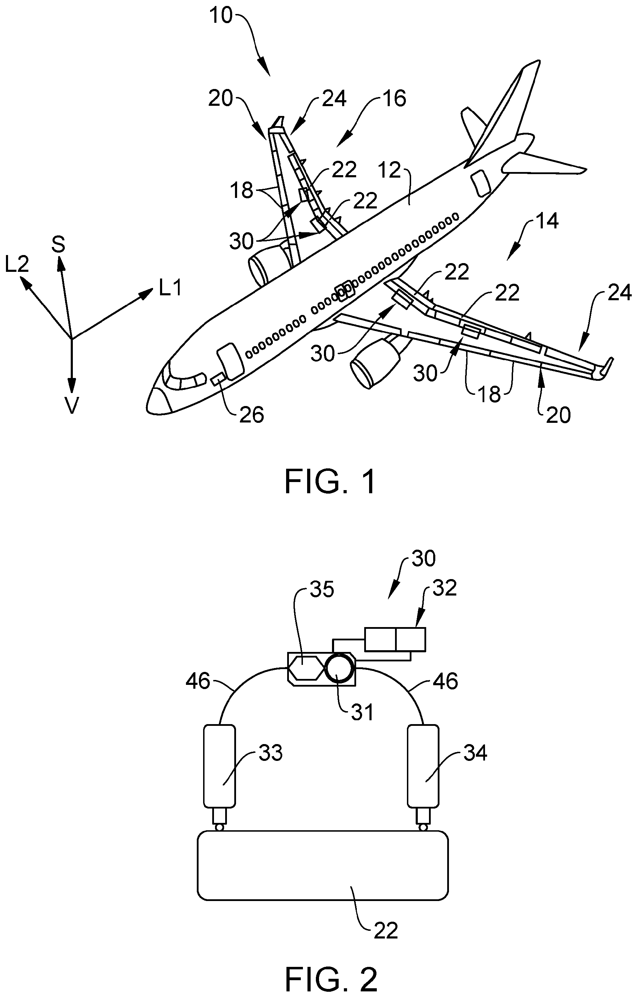

Fig. 1 illustrates an aircraft 10 which comprises a fuselage 12, a fixed left wing 14 and a fixed right wing 16 connected to and extending from opposing sides of the fuselage 12.

The aircraft 10 has three axes which are orthogonal to each other, namely a longitudinal axis L1, a lateral axis L2 and a vertical axis V. Each wing 14, 16 extends in a direction which usually has components of these three axes of the aircraft 10. The direction in which each wing 14, 16 extends between the fuselage 12 of the aircraft 10 and the wing tip is called the spanwise direction S of that wing. The spanwise direction S extends in the plane of the wing 12 and may be parallel to the leading edge 20 of the wing 12. However, it may also deviate from being parallel to the leading edge 20 in certain cases, depending on the specific shape of the wing 14, 16.

Each of the wings 14, 16 includes moveable slats 18 that are arranged in the spanwise direction along the leading edge 20 of the respective wing 14, 16 and movable flaps 22 which are arranged along the trailing edge 24 of the respective wing 14, 16.

The aircraft 10 further comprises a flight control unit 26 that receives actual current flight data and control commands and generates actuating information for setting the position of the slats 18 and flaps 22 dependent on at least one of the flight data and the control commands. For example, the position of the slats 18 and flaps 22 may be extended or retracted so as to control the lift of the aircraft 10, in particular, during take-off and landing of the aircraft 10. The aircraft 10 further comprises at least one high lift system 30. For a decentralized architecture, at least two high lift systems 30 are provided, which may be called high lift sub-systems.

Fig. 1 illustrates a decentralized architecture in which a high lift system 30 is provided for each of the flaps 22. A high lift system 30 may also be provided for each of the slats 18. The high lift system 30 receives commands from the flight control unit 26 for setting the position of the flap 22 and slats 18.

Fig. 2 illustrates a schematic diagram of a high lift system 30 according to an embodiment of the present invention. The high lift system 30 comprises a motor 31 which is driven by a motor control unit 32. The electric motor 31 is coupled to a first actuator 33 and second actuator 34 which are coupled to the flap 22. The high lift system 30 may also include a braking device 35. The electric motor 31 is driven by the motor control unit 32 so as to extend and retract the actuators 33, 34 and consequently to deploy and retract the flap 22. The motor 32 and braking device 35 may be electrically coupled to the first and second actuators 33, 34 by shafts 46, which may be flexible.

Each of the actuators 33, 34 may be a linear type actuator such as, for example, a ball screw actuator. The electric motor 31 receives an activation signal and, in response to this activation signal, rotates in one direction or the other and moves its associated flap actuator 33, 34. The actuator 33, 34 provides a linear movement to the flap 22 to deploy or retract the flap 22. The electric motor 31 may be an AC motor or a DC motor. The electric motor 31 may be a three-phase motor.

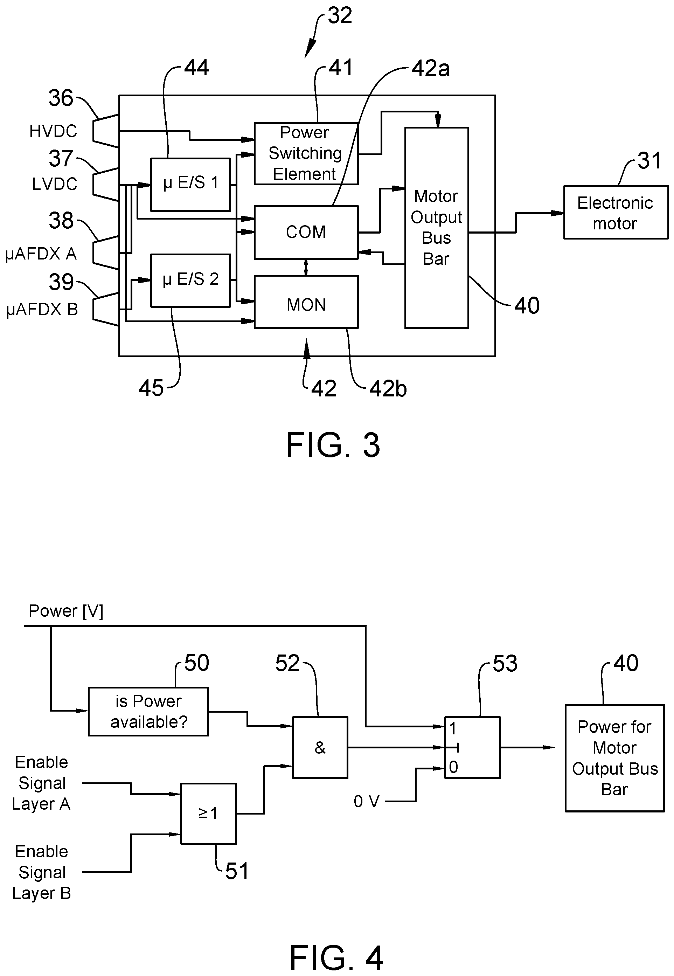

The motor control unit 32 according to the invention is shown in more detail in Figs 3 and 4. Referring to Fig. 3, the motor control unit 32 comprises a high-voltage input terminal 36, a low-voltage input terminal 37, a first bus input terminal 38 and a second input bus terminal 39. The motor control unit 32 also includes an output bus bar 40 which is electrically connected to the electric motor 31. A power switching element 41 is located within the motor control unit 32 and is electrically coupled between the high-voltage input terminal 36 and the output bus bar 40. In other non-illustrated embodiments, the power switching element 41 may be coupled between the low-voltage input terminal 37 and the output bus bar 40.

The motor control unit 32 includes a motor control circuit 42 comprising a command partition 42a and a monitoring partition 42b. The command partition 42a and monitoring partition 42b are coupled to the low-voltage input terminal 37. The command partition 42a sends and receives signals to and from the output bus bar 40 and is also in communication with the monitoring partition 42b. There is, however, no communication connection between the motor control circuit 42 and the power switching element 41.

The first bus terminal 38 is coupled to a first bus reading unit 44 which is coupled to the power switching element 41, the command partition 42a and monitoring partition 42b. The second bus terminal 39 is coupled to a second bus reading unit 45 which is coupled to the power switching element 41, the command partition 42a and the monitoring partition 42b. The power switching element 41 receives command signals by way of the first and second bus terminals 38, 39 and the respective bus reading unit 44, 45 from, for example, the flight control system 26. The power switching element 41 is operatively independent of the motor control circuit 42 of the motor control unit and, therefore, does not receive a command signal from the command partition 42a.

The power switching element 41 for the power switching function is located within the motor control unit 32 and can be used for equipment that is supplied with HVDC (or LVDC) power. The power switching element 41 can be used in a decentralized architecture of the flaps 22 as well as the slats 18. It can be applied to High Lift Systems with or without Power-off Brakes (PoB). In systems without a Power-off Brake, a No-Back Brake could be used as the brake.

In such a decentralized high lift system architecture, movement of the high lift system can be prevented, for example, in a failure event. The drive commands are calculated via the motor control unit The Flight Control Computer (FCC) 26 sends the signal to stop the movement of the lift control device 22 if a fault signal from the motor control circuit 42 commands the lift control device 22 without a signal from the flight control computer 26.

The power switching element 41 can also be used in a motor control unit 32 for any other equipment that needs to be shut off the power by a bus signal, for example, as the power switching element 41 has some logic associated with it, which is able to execute some actions.

The power switching element 41 is directly located in the motor control unit 32. The power switching element 41 receives the command via a bus signal and is an element in the motor control unit 32 that is independent from the motor control logic parts 42a, 42b. The HVDC power supply to the electric motor 31 can be switched by the power switching element 41.

In an embodiment, the power switching element 41 introduces a logic into a power cut off function inside the motor control unit 32. This also locates the function of the power switching 41 in the motor control unit 32 and therefore within one single ATA chapter. In addition, the power switching element 41 is switched via a bus signal from another system, e.g. the flight control computer 26, and is not carried out by the flap control system itself, that is the motor control circuit 42. This element is independent from the COM/MON logic of the motor control circuit 42. Therefore, a faulty motor control circuit 42 could be disabled via the flight control computer 26. Hence it can be ensured that the one high lift control device 22 will not move in the event of a fault. Another advantage of the independent power switching element 41 is that it is possible to test without the logic parts. The test can be executed without complex electronics such that the testing is easier. If the motor control unit 32 is used in a decentralized High Lift System, there is the advantage that a lot of discrete elements, such as direct cable connections, can be omitted.

In an embodiment, at least two high lift systems 30 are used in a decentralized architecture. In a decentralized architecture, the high lift systems 30 may also be called sub-systems. In an embodiment, the decentralized high lift system includes, for example, four systems 30 for the trailing edge of the aircraft wing. Each high lift system 30 is applied to one flap 22. In an embodiment, each of the high lift systems 30has two motor control units 32. In addition, the provision of the power switching element 41 enables the connection to network concepts, since its activation command originates outside of the motor control unit 32 itself.

The invention provides the possibility to fulfil the HVDC requirement of a self-shutdown of the power supply if a failure occurs within the HVDC equipment. It is possible to use the power switching element 41 for this safety requirement too, because the direct power switching is already included in the HVDC control unit 32.

A decentralized High-Lift System architecture provides an actuation of each High-Lift device, e.g. a flap 22 and slat 18, individually. As a result, new challenges to ensure a safe A/C configuration have occurred. One of these challenges is the control of synchronicity of the system. If, for example, one flap 22 moves without a command, there will be an undesirable asymmetry in the system. Due to the decentralized system connected to new network platforms, the logic of the positioning of the flaps 22 is distributed to flap stations. This means that complex logic is included in the motor control units of the flaps 22 and slats 18. To prevent that the flaps 22 will be moved uncommanded via a fault signal from the motor control unit, the power switching element is provided as a segregated element inside the motor control unit 32 which switches the power for the motor by receiving a bus signal from outside of the motor control unit 32.

In alternative embodiment, a centralized high lift system architecture is provided so that the motor control circuit 32 and the electric motor 31 is used to control the position of two or more high lift devices, e.g. two or more flaps 22 or two or more slats 18.

Fig. 3 illustrates an embodiment of the motor control unit 32 which has a µAFDX bus as provided by the network platform, but the principal is adaptable for other types of buses. In the shown case the LVDC is used to supply the logic partitions 42a, 42b and the HVDC supplies the motor 31. The flight control computer 26 sends signals via the µAFDX bus to the motor control circuit 32. One of the signals is the enable signal which chooses the motor control circuit as "drive MCE". In that case, the power switching element 41 will switch the HVDC to the motor output bus bar 40.

Fig. 4 illustrates a logic diagram for switching the switching element 41 in order to remove electric power from the electric motor 31 or to supply electric power to the electric motor 31. Firstly, the power ability check box 50 determines whether power is available. The first and second bus reading units 44, 45 and consequently the enable signal of layer a N layer are connected in parallel to provide redundancy. The first and second bus terminals 38, 39 of the first and second bus reading units 44, 45 are used to send a signal and enable signal. When this enable signal is positive, see OR logic box 51, and power is available, as shown in the AND logic box 52, a signal is output to the box 53 that power should be supplied to the motor 31 by way of the bus bar 40. In this case, power switching element 41 switches on and allows power to flow from the high voltage input terminal 36 to the output bus bar 40 and to drive the electric motor 31. The power switching element 41 may be a relay, for example.

Fig. 4 illustrates the principal logic. By default, the output of the power switching element 41 is de-energized to ensure a safe HLS status at power up and robustness in a failure mode. The power switching element 41 is switchable with at least one layer of the µAFDX bus. This increases the reliability of the power switching element 41 and ensures the safety functionality.

If the motor control circuit 42 is faulty, the flight control computer 26 recognizes the uncommanded movement of the flap 22. In that case, the flight control computer 26 resets the enable signal and the power switching element 41 shuts off the power from the motor output bus bar 40. Therefore, the flap movement will be stopped if there is a No-Back device in the actuator. In case of an active PoB, the power of the PoB is de-energized as well. This may be carried out by way of the power switching element 41. The PoB can be supplied with 28 VDC. In addition to the power switching device 41 or the PoB, the power switching element 41 for the HVDC power supply of the electric motor 31 is included within the motor control unit 32.

In an alternative embodiment, the aircraft 10 comprises a centralized high lift system which comprises one or more of the motor control units 32 according to any one of the embodiments described herein. The one or more motor control units 32 are used to drive one or more motors 31 that are connected to one or more, commonly two or more, lift control devices. The lift control devices may be flaps 22 or slats 18.

### List of reference signs:

10 aircraft
12 fuselage
14 wing
16 wing
18 slat
20 leading edge
22 flap
24 trailing edge
26 flight control unit
30 high lift system
31 electric motor
32 motor control unit
33 first actuator
34 second actuator
35 braking device
36 first voltage input terminal
37 second -voltage input terminal
38 first bus input terminal
39 second input bus terminal
40 output bus bar
41 power switching element
42 motor control circuit
42a command partition
42b monitoring partition
44 first bus reading unit
45 second bus reading unit
46 shaft
50 power availability check box
51 OR logic box
52 AND logic box
53 output signal box

## Claims

1. A motor control unit (32), comprising:
a first voltage input terminal (36);
a second voltage input terminal (37);
at least one bus terminal (38, 39);
an output bus bar (40) that is configured to control an electric motor (31) by at least one bus reading unit (44; 45);
a motor control circuit (42) that is coupled to the output bus bar (40);
a power switching element (41) coupled between the first voltage input terminal (36) and the output bus bar (40) or between the second voltage input terminal (37) and the output bus bar (40),
wherein the power switching element (41) is located in the motor control unit (32) and is configured to receive a command from the bus reading unit (44; 45) causing the power switching element (41) to switch on or off.

2. The motor control unit (32) according to claim 1, wherein the power switching element (41) comprises a relay.

3. The motor control unit (32) according to claim 1 or claim 2, wherein the power switching element (41) is switchable independent of the motor control circuit (42).

4. The motor control unit (32) according to any one of claims 1 to 3, wherein a first bus reading unit (44) and a second bus reading unit (45) are coupled in parallel, wherein a first one of the bus terminals (38) is coupled to the first bus reading unit (44) and a second one of the bus terminals (39) is coupled to the second bus reading unit (45).

5. The motor control unit (32) according to any one of claims 1 to 4, wherein the motor control circuit (42) comprises a command partition (42a) and a monitoring partition (42b), wherein the command partition (42a) is communicatively coupled with the output bus bar (40) and with the monitoring partition (42b), and wherein the at least one bus reading unit (44; 45) is communicatively coupled to the command partition (42a), the monitoring partition (42b) and the power switching element (41).

6. The motor control unit (32) according to any one of claims 1 to 5, wherein the at least one bus reading unit (44; 45) is configured to receive a signal from a flight control computer (26) to reset an enable signal, thus causing the power switching element (41) to switch off the power supply to the output bus bar (40).

7. A high lift system (30) of an aircraft, comprising:
at least one motor control unit (32) of any one of claims 1 to 6;
an electric motor (31) that is driven by the motor control unit (32);
at least one lift control device (22; 18),
wherein the electric motor (31) is coupled to the at least one lift control device (22; 18) so as to extend or retract the at least one lift control device (22; 18).

8. The high lift system (30) according to claim 7, wherein the electric motor (31) is coupled to at least one actuator (33; 34) that is coupled to the at least one lift control device (22; 18) so as to extend or retract the at least one lift control device (22; 18).

9. The high lift system (30) according to claim 7 or claim 8, wherein the lift control device is a flap (22) or a slat (18) and the high lift system (30) is a decentralised system or a centralized system.

10. The high lift system (30) according to any one of claims 7 to 9, wherein the electric motor (31) is a three-phase motor or a DC motor or a AC motor.

11. The high lift system (30) according to any one of claims 7 to 10, wherein the motor control unit (32) is configured to receive commands from a flight control unit (26) for primary and, optionally, secondary flight control.

12. An aircraft wing (14; 16) comprising:
at least one high lift system (30) according to any one of claims 7 to 11,
a plurality of lift control devices (22; 18), wherein one motor control unit (32) is coupled to one electric motor (31) that is coupled to at least one lift control device (22; 18) so as to extend or retract the at least one lift control device (22; 18).

13. The aircraft wing (14; 16) according to claim 12, wherein the electric motor unit (31) is coupled to at least one actuator (33, 34) that is coupled to the at least one lift control device (22; 18) so as to extend or retract the at least one lift control device (22; 18).

14. The aircraft wing (14; 16) according to claim 12 or claim 13, wherein the least one high lift system (30) provides distributed flap and/or slat control.

15. An aircraft (10) comprising at least one aircraft wing (14; 16) according to any one of claims 12 to 14.
